# EUROPEAN PATENT APPLICATION

(11) **EP 0 651 355 A2**
(43) Date of publication of application: **03.05.1995**
(21) Application number: 94420290.2
(22) Date of filing: 25.10.1994
(51) Int. Cl.: G07C 9/00

(54) **Method and apparatus for image compression, storage and retrieval on magnetic transaction cards**

(30) Priority: 29.10.1993 US 145051
(71) Applicant: EASTMAN KODAK COMPANY, Rochester, New York 14650-2201 (US)
(72) Inventor: Ray, Lawrence Allen, c/o Eastman Kodak Co., Rochester, New York 14650-2201 (US); Ellson, Richard Nathan, c/o Eastman Kodak Co., Rochester, New York 14650-2201 (US); Gandhi, Bhavan Raman, c/o Eastman Kodak Co., Rochester, New York 14650-2201 (US)
(74) Representative: Boulard, Denis

(57) **Abstract**

A transaction card is described in which an identifiable image can be stored in a limited amount of storage space. The image to be stored is converted to a pixel representation. The pixel representation is divided into a plurality of ordered image portions. Each image portion is compared with a set of reference pixel groups. Associated with each pixel group is a signal group. For each image portion, a signal group is chosen for the associated pixel group most closely associated with the pixel image portion. The signal groups are stored as physical patterns on the storage region of a transaction card. The physical patterns are read and converted to electrical signals, the signal groups can be identified. From the signal groups, a reference pixel group is identified and the reference pixel group is positioned with respect to the image at the same location as the image portion. Using this technique, a recognizable image can be constructed from images information compatible with the ISO-7811/2 standards.

## Description

### Field of Invention

This invention relates generally to the field of image compression and, more particularly to the apparatus and techniques for producing an image of sufficient quality to enable recognition of a person. The image is stored within the data capacity constraints of a conventional 210 bpi swipe-readable magnetic media such as those described by ISO 7811/2 standards.

### Background of the Invention

Many types of transactions and access to services are authorized by the presentation of some form of identification/transaction/access card such as a credit card, debit card, voter registration card, or a health care access card. Many of these cards have incorporated thereon a stripe of magnetic material on which information has been written by the issuer of the card to aid in either access to services and/or identification of the card holder. Such cards are referred to, hereinafter, as transaction cards.

Fraudulent use of transaction cards occurs when an individual presents an unauthorized card issued to another at a transaction point in order to gain access to services or resources. This problem is addressed by the present invention.

Fraud in the credit industry can be used to illustrate the problem. One method of reducing fraud focuses on the confirmation of the identity of the person presenting a card at the transaction point as the individual to whom the card was authorized by the issuer. Images of card holders are useful in this identification process. Images of card holders are now printed on some of the poly-vinyl chloride (PVC)card stock of financial transaction cards such as the PhotoCard from the Citibank Corporation. This method takes a reflection print included with the credit application, captures the print with an electronic camera to convert a color digital format, and then "digitally imprints" the color image with a thermal dye-transfer process onto the PVC.

Transaction cards without images printed thereon are counterfeited today. The addition of the digitally imprinted image of a card holder makes counterfeiting more difficult as card fabrication requires the writing of a false image onto the card. However, imprinting an image alone is not sufficient to prevent card forgery.

The image imprinted on the card with dye is not directly available in digital form, although a similar digital file could be recovered by converting the analog dye densities back to a digital signal by rescanning. The two digital images are unlikely to match exactly, and the process involves color scanning hardware not normally found at the transaction point or other financial transaction locations. In order to use the image information for other means to deter card fraud, the digital image information has to be stored on the card. This method is a realization of a system targeted for verification of credit transaction cards. Such a scheme is disclosed in U.S. Patent 5,321,751 entitled "Method and Apparatus for Credit Card Verification"; invented by Lawrence A. Ray and Richard N. Ellson; issued June 14, 1994; and assigned to the assignee of the present U.S. Patent Application.

Magnetic data densities on financial transaction cards are very low in comparison to modern magnetic media used for computer data storage as in the common 3 1/2 inch micro diskettes. The high-density track of a financial transaction card has been written with 210 bits per inch on a track less than 3 inches long. Financial cards are formatted with a maximum of three data tracks, one of which has an even lower density of 75 bits per inch. Total storage capacity if all tracks were high density would be less than 2000 bits, or under 250 bytes. It is desired to only use a single track for digital image storage for several reasons, such as the need to store account information, and keeping the magnetic head assembly inexpensive. Data capacity of single track of the conventional credit card in use today is less than 600 bits.

Digital images of even relatively modest image size require a significant number of bits to either store or encode uncompressed raw images. Consequently there has been a continuing effort to develop ever more sophisticated image compression methods to reduce the impact of storing digital images. For instance a very small, uncompressed, full color image could easily require nearly 240,000 bits.

Augmenting the data on the card with additional data transmitted to the transaction point has proven impractical. Raising bandwidth of communications to enable transmission of the entire or part of the image would require substantial investment in the communications network in order to maintain quick transaction times and keep down queue times for transaction terminals. Also, since transaction point communications are largely done over existing telephone networks any improvement in bandwidth is largely outside the control of the credit card industry. Current transactions require 1000 bits, and network loading factors are such that even additions of 50% to the transaction size would severely increase customer queue times to the point of being unacceptable.

A need has therefore been felt for apparatus and a method for storing recognizable image in a small storage area. Specifically, a need has been felt for apparatus and a method to store a recognizable image on a transaction card which conforms to the ISO-7811/2 standards.

### Summary of the Invention

The present invention is directed to overcoming one or more of the problems set forth above. Briefly summarized, according to one aspect of the present invention, a system is for enabling "identification quality" digital images to be stored completely in compressed form on a single track of a ISO-7811 series magnetic card format. The system involves the representation of an image by a matrix of pixels and the division of the image pixel matrix into a plurality of image pixel blocks. Each image pixel block is compared to a set of reference pixel blocks in a codebook. Each reference pixel block is identified by a reference signal group. The signal group identifying the reference pixel block most closely related to the portion of the image represented by the image pixel block is selected. The selected signal groups provide a compressed representation of the pixel image. A version of the original pixel image can be reconstructed by assembling the reference pixel groups identified by the reference signal groups.

The disclosed image storage system advantageously permits an identifiable image to be stored in a small amount of space. In particular, an identifiable facial image can be stored on a transaction card within the constraints identified by the ISO-7811/2 standards.

These and other aspects, objects, features and advantages of the present invention will be more clearly understood and appreciated from a review of the following detailed description of the preferred embodiments and appended claims, and by reference to the accompanying drawings.

### Brief Description of the Drawings

Figure 1A is a block diagram of the apparatus for applying an encoded image on a transaction card, while Fig. 1B indicates the steps in applying an encoded image on a transaction card.
Figure 2A is a block diagram of the apparatus for retrieving an encoded image from a transaction card, while Figure 2B describes the steps in retrieving an encoded image from a transaction card.
Figure 3 illustrates the decomposition of an image pixel matrix into image pixel blocks.
Figure 4 illustrates the selection of reference signal group derived from an image pixel block.
Figure 5 illustrates the ISO Standard data format for magnetic stripe on a credit card

### Detailed Description of the Invention

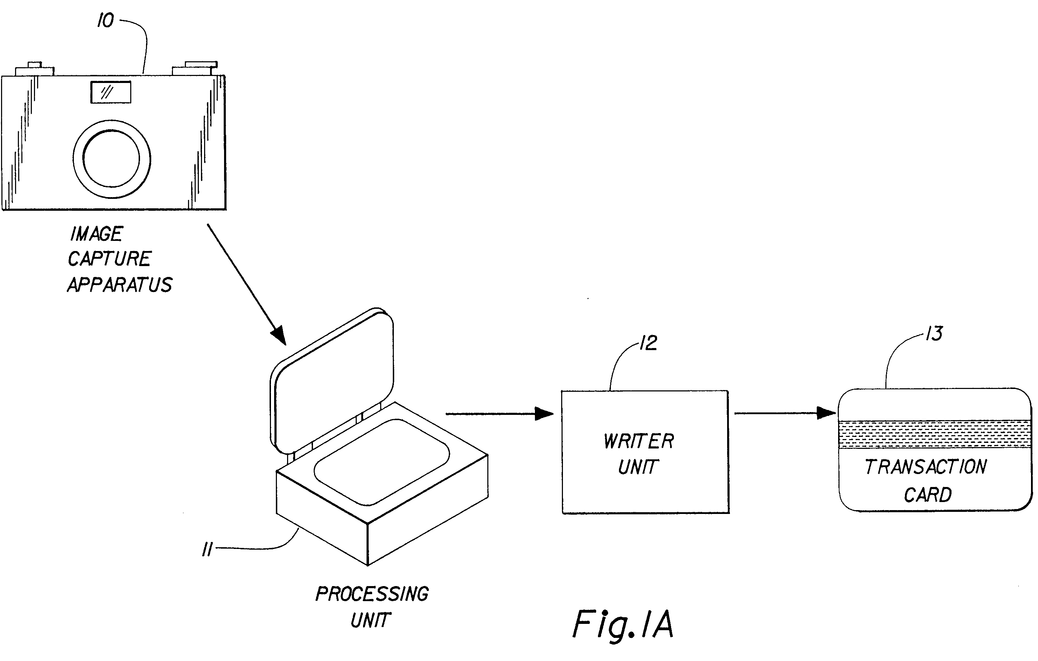

Referring to Fig. 1A, the apparatus for encoding image information on a magnetic stripe of a transaction card 13 is illustrated. An image is captured by an image capture apparatus 10 in a form capable of being stored and transformed into digital logic signals. The image can be captured, for example, on photographic film or can be stored as a set of analog electrical signals. In the example of a photographic film, the image capture apparatus 10 includes a film reader to provide a set of analog signals. The analog signals can be applied to an analog-to-digital converter. The digital signals from the image capture apparatus 10 are applied to a processing unit 11 wherein the image information is compressed. The resulting digital signals are applied to a writer 12 wherein the digital signals are encoded as electrical signals whereby the writer 12 generates a storage pattern on a storage material on the transaction card 13.

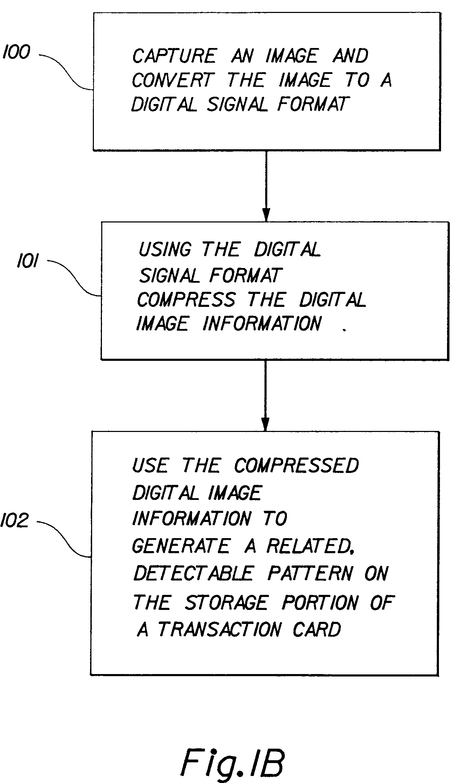

Referring to Fig. 1B, the process for storing encoded image information on a transaction card is shown. In step 100, an image is captured and is transformed into an ordered set of digital signals. The digital signals are then compressed in step 101. In step 102, the compressed digital signals are used to generate a recognizable pattern on a storage material associated with the transaction card.

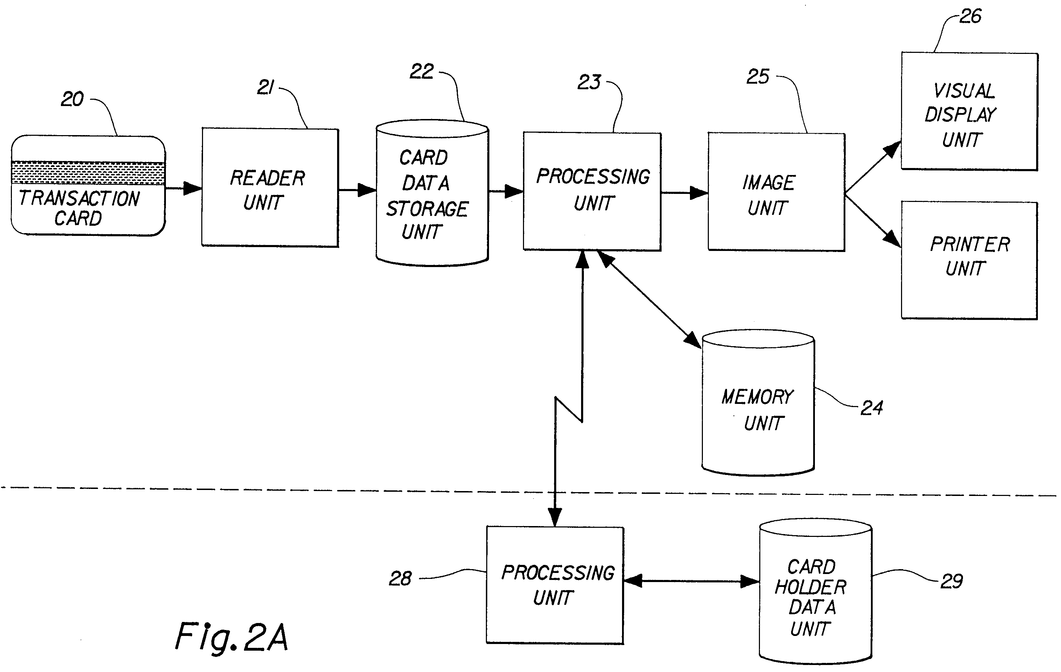

Referring to Fig. 2A, the apparatus for retrieving encoded information from the storage portion of a transaction card 20 is shown. The reader 21 recognized the patterns in the storage area of the transaction card 20 and converts the patterns to a set of digital signals. The digital signals retrieved from the transaction card are stored in card data storage unit 22. The data from the card data storage unit 22 is applied to the processing unit 23. In the processing unit 23, digital signals are restored (i.e., decompressed) using the codebook memory unit 24. The codebook memory unit 24 is typically a memory unit, but can have a plurality of implementations. The digital signals of the restored image are applied to the image unit 25. The image unit 25 converts the signals comprising the restored image into signals appropriate for driving a visual display unit 26 or a printer unit 27. In certain circumstances, the processor unit 23 can transfer data, (e.g., the compressed image digital signals to a remote processing unit 28. In the remote processing unit 28, the images stored on the transaction card 20 can be compared with information stored in card data storage 29. This comparison can take place when the transaction at a remote location has a problem associated therewith.

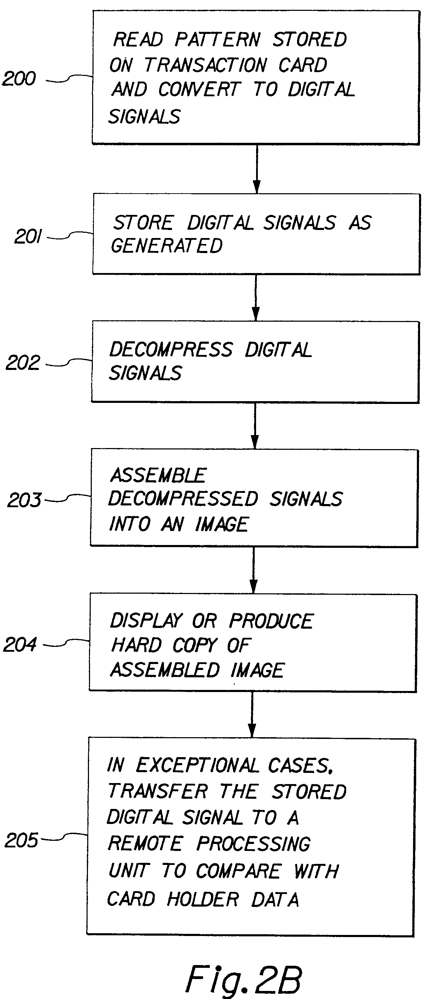

Referring to Fig. 2B, the process by which an image is retrieved from a transaction card is shown. In step 200, a reader interacts with the transaction card and translates the pattern stored in the storage area of the transaction card into digital signals. The digital signals are stored, in step 201, as the signals are identified by the reader. In step 202, the digital signals are restored, i.e., are decompressed. The decompressed digital signals are assembled into a "restored" image in step 203. In addition, step 203 can include additional processing such as artifact removal. In step 204, the signals representing a restored image are applied to the driver circuits of an image display unit or a printer and the restored image is provided for visual examination or comparison. In step 205, the image stored on the transaction card, or a portion thereof can be transferred to a remote location for comparison, verification, etc. with an archival copy of the image stored on the transaction card.

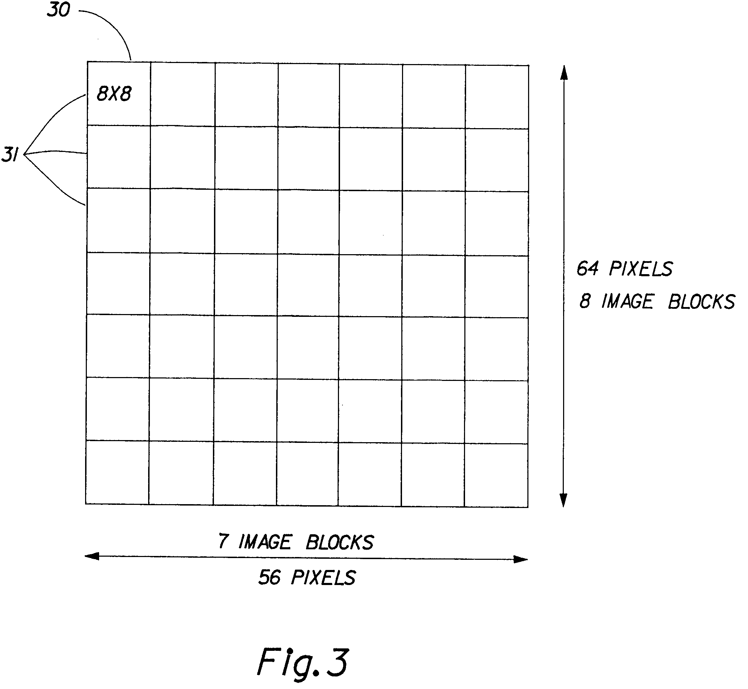

Referring to Fig. 3, an image pixel matrix is converted into a matrix of pixels. In the example cited, the image matrix 30 is 64 pixels by 56 pixels. The pixel matrix 30 is divided into image blocks 31 of 8 pixels by 8 pixels.

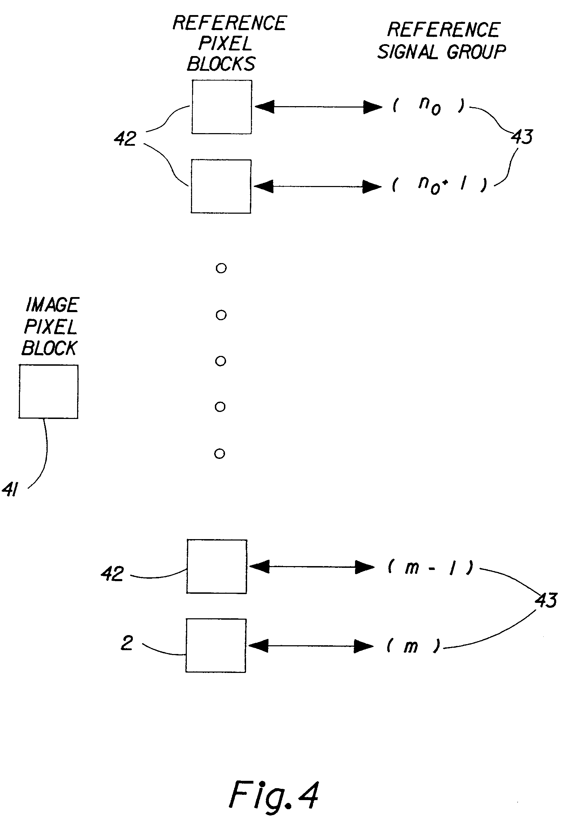

Referring to Fig. 4, the image pixel block 41 has associated therewith a plurality of reference pixel blocks 42. Each reference pixel block has a reference signal group 43 associated therewith. The set of reference signal blocks 42 do not include all possible pixel combinations identified therein. Therefore, based on a predetermined criteria, the reference pixel block most closely associated with the image pixel block is selected and the identifying signal group 43 is used to identify the image at the location of the image pixel block. The set of signal groups resulting from the comparison of the image pixel block and the reference pixel block is a compressed representation of the image pixel matrix. This representation can stored on the transaction card. In order to reconstruct the image, at the station reading the transaction card, the set of signal groups is identified and the associated reference pixel group placed in the position of the image pixel block generating the reference signal group.

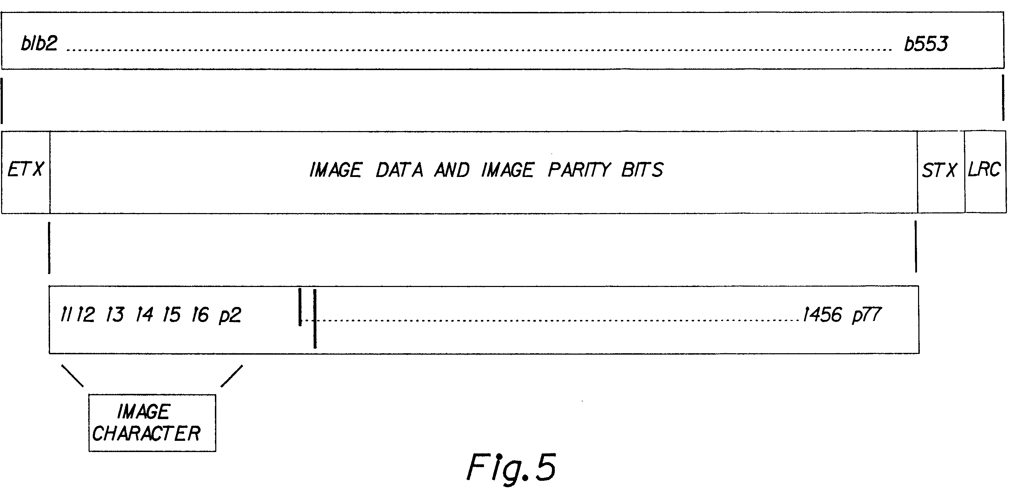

Referring to Fig. 5, the data format structure of the transaction card of the preferred embodiment is shown. ISO 7811 standards for magnetic encoding on credit cards permits up to 79 "characters" where each character is comprised of a seven-bit string. The data format has 553 raw data bits, the m^{th} bit in the resulting string will be denoted by b(m). The first character or first 7 bits is a special character known as a start sentinel (STX) which denotes the start of the string of data bits. Bit b(8) through bit b(539) are known as the image and image parity bits. The image bits are denoted as iⱼ, j = 1,...,456, and the parity bits are denoted by pₖ, k = 2,...,77. The image and parity bits are interleaved such that after every sixth image bit there is a parity bit. The seventh bit is determined by the other six bits according to the relationship:

### Odd Parity Equation

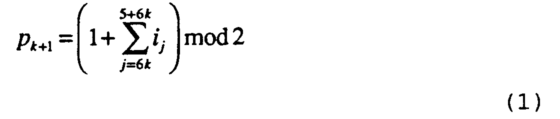

There are two other special control characters, the end sentinel character (ETX) and the longitudinal redundancy check (LRC). Other characters have six data bits and the seventh bit is an odd-parity bit.

As a result the bit stream resulting from the image compression must be parsed with odd-parity bits inserted after every sixth bit in order that the format comply with the ISO standard. The first six bits are determined for the longitudinal redundancy code by: 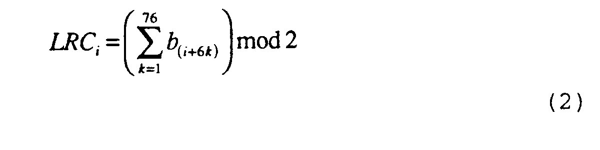
The seventh bit of the LRC, LRC7, is determined by the equation:

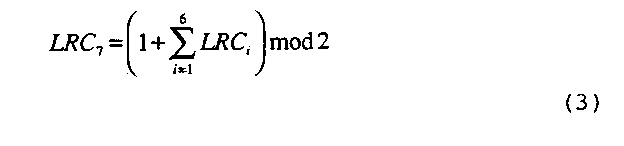

In some magnetic readers there is an automatic conversion of two input characters being mapped to a single output character. As a result there are three six-bit strings which cannot be included as any of the data values encoded on the magnetic stripe. These characters are encoded as 7, 31 and 62, and referred to as A, B and C.

The present invention is a system for enabling "identification quality" digital images to be stored completely in compressed form on a single track of a ISO-7811 series magnetic card format. This includes the ability to 1) process a portrait image into a compressed image which can be stored within the data storage limitations of the 210 bpi track of a conventional transaction card, 2) transfer data to a magnetic card track, 3) read of the track with a transaction reader, 4) decompress back into the image, and 5) display of the image. Image display can occur, but is not limited to, a printed form on a receipt printer or as a multi-level image on a video display terminal.

The information capacity of a magnetic stripe on a transaction card is quite small in comparison to a digitized photographic portrait. By international standards, described in ISO-7811/2, the total storage capacity of the high-density track on financial transaction cards is 553 bits, and 97 of these bits are reserved for parity checks and control characters. This leaves 456 bits. There are also a few characters reserved as control characters, the effect of which is to reduce the actual number of information bits to 451 bits. The preferred embodiment of this invention is a compression scheme which block encodes the image into 442 bits, leaving the additional 14 bits to circumvent the use of reserved characters in the ISO-7811 character set.

Variable bit-rate image compression methods, such as Huffman coding are not well-suited for this application as there is a fixed number of bits available (see R. J. McEliece, The Theory of Information and Coding, Addison-Wesley, Reading, Mass., 1977). While on average, for a given quality level variable rate methods compress images to smaller numbers of bits, there will be instances where the methods yield a larger number of bits than available. To write the image onto a magnetic stripe which has a fixed maximum data capacity, a fixed bit-rate compression method is preferred to insure the compressed image will fits onto the stripe.

Lossy compression methods are also required as the image information, known as entropy, is greater than the existing information capacity of the magnetic card. This is even the case if the image has been preprocessed to reduce the number of levels a pixel can attain. Entropy for a simple bi-tonal image can easily require 1000 bits and there is no known lossy compression methods for bi-tonal imagery.

Compression by vector quantization (VQ) is well-suited for fixed-rate, lossy, high-ratio compression applications (see R. M. Gray, "Vector Quantization, " IEEE ASSP Magazine, Vol. 1, April, 1984, pp. 4-29). This method breaks the image into small patches or "image blocks." These blocks are then matched against other image blocks in a predetermined set of patches, commonly known as the codebook. The matching algorithm is commonly the minimum-squared-error (MSE). Since the set of patches is predetermined, one of the entries of the set can be referenced by a simple index. As a result a multi-pixel block can be referenced by a single number. Using such a method the number of bits for an image can be budgeted. When a greater number of bits is allocated per image block, either the size of the codebook can be increased or the size of the block can be made smaller. In either case, the image becomes a more faithful rendition of the original.

In most imaging applications there is little to no prior knowledge about the image, and algorithms are designed to operate independent of where they are within an image. Some algorithms are somewhat adaptive to their image environment and use the statistical information perceived will processing the image to alter the algorithm process.

In the current invention, a far greater amount of prior information is possible than in conventional adaptive techniques. The images are known to be portraits. Moreover, by preconditioning the images to conform to certain standards, a far greater amount of information can be anticipated by the compression process as a result of a high degree of correlation between image blocks in different images. For example, the compressor might know where to locate certain image features such as the location and orientation of the eyes.

In order to achieve the best possible image quality for image compression ratios of the magnitude required to fit the resulting image codes on a single magnetic track, the original portrait images are processed. This is not a requirement, but leads to great improvements in quality. Image processing helps standardize the characteristics of the images and adds to their predictability. This predictability leads to improved quality and higher compression ratios. In our preferred embodiment, a 56 x 64 pixel sub-image is extracted from an original digital image with a minimum size of 128 x 128 pixels. Images are processed to enhance contrast and to normalize statistical descriptions of the image. One such method is histogram equalization.

A desirable sub-image would be the result of manipulating the image in order to locate the eyes of the person depicted in the portrait image in order to position one of the eyes at a predetermined pixel location and to cause the other eye to be in a predetermined orientation, e.g., horizontal, from the eye at a given location. In addition the distance between eyes can be predetermined and the image can either be zoomed or reduced to accomplish this. In order to accomplish this image standardization, the eyes are found in the original image either manually or via an automated feature extraction method. Given the pixel coordinates in the original image, a transformation to the standardized image format can be found. (This image manipulation would involve a combination of a translation, zoom, and rotation of the original image.) This method can be accomplished either mechanically with the original image or using digital methods with a prescanned image.

Codebooks are determined by forming a collection a number of representative images, known as the training set. Images are structured into patches as shown in Figure 1. The patches are then considered as vectors in a high-dimensional vector space, e.g., for an 8x8 patch, the space has 64 dimensions. In the preferred embodiment the patches are selected from predetermined regions within the image. Once all the vectors are determined from the training set clusters, e.g., cluster centroids, are determined and representative elements are assigned to each cluster. The clusters are determined in such a manner to minimize the overall combined distances between a member of the training set and the representative for the cluster the member is assigned. A standard method of accomplishing this is the Linde-Buzo-Gray (LBG) algorithm (see Y. Linde, et. al., "An Algorithm for Vector Quantizer Design," IEEE Transactions on Communications, Vol. COM-28, No. 1, January, 1980, pp. 84-95). The number of clusters is determined by the number of bits budgeted for a block. If n bits are budgeted, then the codebook can contain up to 2n cluster representatives or codevectors.

In the preferred embodiment of the invention the image size is 56 pixels across and 64 pixels high. The image is partitioned into blocks where each block consists of a region 8 pixels wide and 8 pixels high and is displayed in Figure 1. However, other configurations are also possible including partitions of the image in block of multiple sizes. The codevalues are either a seven-bit or nine-bit value, with a total length of 442 bits. In order to encode the bit stream onto the magnetic stripe and comply with international standards for financial transaction cards, the bit stream has to be reformatted in the following manner. This string of bits has to be split into six-bit segments. An odd parity bit is then inserted after the sixth bit to comprise a character able to be encoded on the magnetic stripe. However, there are three special characters in the 64 character font which are used as control characters.

In order to recover the image the magnetic card is passed through a standard ISO compliant magnetic reader and the bit stream is reassembled in the obvious manner. The architecture of image is employed and the same codebooks are referenced to reassemble the image in the obvious manner. One of the image artifacts that results from VQ is known as block artifacts. This appears as window panes in the object and are visually objectionable. In order to reduce the appearance of these artifacts a digital filter is applied across the block boundaries with the purpose of smoothing the artifacts. In the preferred embodiment the smoothing filter is given by the vector (0.25, 0.5, 0.25). The filter is applied both horizontally and vertically.

The resulting image can then be displayed on a video display unit or is printed on a printer. If the image is to be printed then the preferred printing methods use a method of digital half-toning. The particular half-toning method depends upon the resolution of the printer, properties such as ink spreading on paper, to name a couple considerations.

If so desired the compressed image could be transmitted over a communications link. The purpose of this would be to transmit the image of a person presenting himself as a cardholder, but does not meet some card validation criteria.

It will be now appreciated that there has been presented in which an image can be retrieved and stored in a relatively small storage space. Because the image is stored on the card itself, image transmission from a central file location is avoided. In addition, because of the small storage capacity required, the image associated with the transaction can be stored at a local transaction site and transmitted, in a compressed or uncompressed form, to a central location only upon the occurrence of an exceptional situation. The system uses commercially available equipment with the exception of the processing equipment for performing the data compression.

While the invention has been described with reference to a transaction card having a magnetic strip thereon, it is apparent that the invention is easily adapted to other storage techniques, such as optical storage techniques in which an image must be stored in a relatively small amount of storage space.

While the invention has been described with particular reference to a preferred embodiment, it will be understood by those skilled in the art that various changes may be made and equivalents may be substituted for elements of the preferred embodiment without departing from invention. In addition, many modifications may be made to adapt a particular situation and material to a teaching of the invention without departing from the essential teachings of the present invention.

As is evident from the foregoing description, certain aspects of the invention are not limited to the particular details of the examples illustrated, and it is therefore contemplated that other modifications and applications will occur to those skilled in the art. It is accordingly intended that the claims shall cover all such modifications and applications as do not depart from the true spirit and scope of the invention.

### Parts List

10 Image capture apparatus
11 Processing unit
12 Writer unit
13 Transaction card
20 Transaction card
21 Reader unit
22 Card data storage unit
23 Processor unit
24 Image unit
25 Image unit
26 Visual display unit
27 Printer unit
28 Processing unit
29 Card holder storage unit
30 Pixel image matrix
31 Image pixel block
41 Image pixel block
42 Reference pixel block
43 Reference signal group

## Claims

1. A method of encoding image information storage area on a transaction card, the method comprising the steps of:
representing said image by a multiplicity of pixels;
dividing said pixels into pixel groups, wherein said pixel groups are ordered according to a location in said image;
comparing said pixel groups with a plurality of reference pixel groups, each of said reference pixel groups having bit group associated therewith;
based on said comparing step, selecting a bit group; and
storing each said bit group in a position on said storage area determined by an image location of said associated pixel group.

2. The method of claim 1 further comprising the steps of:
associating each pixel location with a one of a plurality of sets of reference pixel groups, each reference pixel group of a set having a bit group associated therewith; and
in said comparing step, for each pixel group, comparing said each pixel group with said set of reference pixel groups associated with said each pixel group location; and
in said comparing step, based on said comparison, selecting a bit group associated with a one of said reference pixel group associated with a bit location.

3. The method of claim 1 wherein said storing step includes the step of storing said bit groups on said storage media in a format compatible with ISO-7811/2 standards.

4. A method of reconstructing an image stored on a transaction card, said method comprising the steps of:
reading the patterns from the storage region on said transaction card;
converting at least a portion of said patterns to an ordered plurality of signal groups;
identifying a pixel group associated with each signal group; and
arranging each identified signal group in a location of said image specified as a result of the ordering of the associated signal group.

5. The method of claim 4 wherein said pattern is compatible with the ISO-7811/2 standards.

6. A transaction card comprising:
a support area; and
a storage area coupled to the support area, said data support area having a recognizable pattern stored thereon, said pattern representing a plurality of signal groups, each signal group associated with a portion of an image, each of said signal groups identifying a selected pixel image group from a set of image groups, said identified image pixel group related to a predetermined portion of a pixelized image stored on said transaction card.

7. The transaction card of claim 6 wherein said data storage area is a magnetic stripe, whereby said pattern can be identified by a magnetic reader.

8. The transaction card of claim 7 wherein said pattern is in compliance with the ISO-7811/2 standards.

9. Apparatus for storing a compressed image of an original pixelized image on a storage medium, said apparatus comprising:
separation apparatus for separating said pixelized image into a multiplicity of pixel blocks, each of said pixel blocks having an identified relationship with said pixelized image;
storage apparatus for storing a codebook of reference pixel blocks, each of said reference pixel blocks having a identifying signal group associated therewith;
selection apparatus for comparing each image pixel block with said codebook of reference pixel blocks, said selecting means selecting a reference signal group based on a criterion for said comparing; and
writing apparatus for writing a pattern on said storage medium, said pattern including a portion identifying said selected reference signal groups.

10. Apparatus for reading a stored compressed image from a storage medium, said apparatus comprising:
reading unit reading at least a multiplicity of signal groups from said storage medium;
a storage unit storing a set of reference pixel images;
retrieval unit retrieving from said storage unit a reference pixel group associated with each said retrieved signal group; and
an image unit assembling each reference image group in a predetermined image location and displaying an image resulting from the assembling of the reference image groups.
